# DEMANDE DE BREVET EUROPEEN

(11) **EP 4 765 720 A1**
(43) Date de publication de la demande: **24.06.2026**
(21) Numéro de dépôt: 25224511.3
(22) Date de dépôt: 17.12.2025
(51) Int. Cl.: H04L 9/06

(54) **PROCÉDÉ ET DISPOSITIF DE CHIFFREMENT DE DONNÉES NUMÉRIQUES, PROCÉDÉ ET DISPOSITIF DE DÉCHIFFREMENT ASSOCIÉS**

(30) Priorité: 18.12.2024 FR 2414417
(71) Demandeur: THALES, 92190 Meudon (FR)
(72) Inventeur: DUPIN, Aurélien, 92622 Gennevilliers Cedex (FR); RICOSSET, Thomas, 92622 Gennevilliers Cedex (FR)
(74) Mandataire: Lavoix

(57) **Abrégé**

Ce procédé de chiffrement de données numériques formant un message comportant une suite de blocs initiaux, ayant chacun un indice associé, comporte une étape d'initialisation mettant en œuvre un triplet de paramètres cryptographiques pour fournir une clé interne, et un enchaînement (62) de chiffrements par blocs des blocs initiaux dépendant de la clé interne. Le procédé comporte une partition (50) du message en au moins deux sous-messages, comportant chacun un bloc de début de premier indice et un bloc de fin de deuxième indice, et un chiffrement de chaque sous-message, comportant
-- une application (54) d'une transformation cryptographique sur des éléments du triplet de paramètres cryptographiques permettant d'obtenir une clé interne intermédiaire,
- une combinaison (56) de la clé interne intermédiaire avec lesdits premier et deuxième indices, puis une nouvelle application (58) de la transformation cryptographique sur le résultat de la combinaison pour obtenir ladite clé interne associée au sous-message.

## Description

La présente invention concerne un procédé de chiffrement de données numériques formant un message comportant une suite de blocs initiaux de taille prédéterminée.

L'invention concerne également un dispositif de chiffrement de données numériques associé, et un programme d'ordinateur de chiffrement associé, ainsi qu'un procédé de déchiffrement, un dispositif de déchiffrement et un programme d'ordinateur de déchiffrement associés.

L'invention se situe dans le domaine de la sécurisation des données numériques au sein des composants logiciels ou matériels.

Le chiffrement de données numériques est critique pour assurer la sécurité des données et éviter l'appropriation de données confidentielles par des tiers.

Plusieurs mécanismes de chiffrement et déchiffrement de données numériques ont été mis au point et standardisés.

Le chiffrement AES (pour « Advanced Encryption Standard ») a été standardisé par le NIST (« National Institue of Standards and Technology ») en 2001. Le chiffrement AES prend en entrée des blocs de 128 bits (ou 16 octets) et des clés cryptographiques de 128, 192 ou 256 bits. Cependant le chiffrement AES est peu adapté pour une utilisation en environnement embarqué, possédant des ressources calculatoires contraintes.

Afin de mieux s'adapter à une mise en œuvre avec des ressources calculatoires limitées, le standard de cryptographie légère ASCON a été sélectionné. Le standard ASCON permet d'assurer la confidentialité et d'authentifier les données numériques, comme décrit dans la spécification «Ascon-Based Lightweight Cryptography Standards for Constrained Devices: Authenticated Encryption, Hash, and Extendable Output Functions », publiée sous la référence NIST SP 800-232.

Dans sa version courante, le standard ASCON utilise, dans le mode AEAD (pour « Authenticated Encryption with Associated Data ») un enchaînement des chiffrements des blocs de taille prédéterminé formant un message à chiffrer. Plus précisément, le mode AEAD d'Ascon, après initialisation puis traitement des données associées, chiffre la donnée claire séquentiellement bloc par bloc en appliquant l'opération XOR *(exclusive OR)* au bloc initial (en clair) courant et à une partie de l'état interne, qu'on appellera également clé interne, afin d'obtenir le bloc chiffré correspondant. Ce bloc chiffré est réinjecté dans l'état interne, l'application répétée d'une permutation sur l'état interne permet alors d'obtenir l'état interne permettant le chiffrement du bloc initial suivant et ainsi de suite. L'opération de déchiffrement procède de manière similaire pour déchiffrer les blocs, du premier jusqu'au dernier, en appliquant l'opération XOR au bloc chiffré et à une partie de l'état interne courant.

Cet enchaînement ne permet pas de réaliser un déchiffrage partiel : pour déchiffrer une sous-partie d'un message, il est nécessaire de déchiffrer tous les blocs précédant les blocs de la sous-partie du message à déchiffrer. De plus, l'authentification s'applique nécessairement au message chiffré en son entier.

Dans certaines applications pratiques, il est utile d'être en mesure de déchiffrer des sous-parties d'un message chiffré sans avoir à déchiffrer la totalité du message, ou du moins tous les blocs du message précédant la sous-partie du message qu'on souhaite déchiffrer.

L'invention a pour objet de remédier aux inconvénients précités, en proposant un procédé et dispositif de chiffrement du type décrit ci-dessus mais permettant un accès en déchiffrement par sous-parties.

A cet effet, l'invention a pour objet un procédé de chiffrement de données numériques formant un message comportant une suite de blocs initiaux de taille prédéterminée, chaque bloc initial ayant un indice associé dans ladite suite de blocs, le chiffrement comportant une étape d'initialisation mettant en œuvre un triplet de paramètres cryptographiques pour fournir une clé interne, et un enchaînement de chiffrements par blocs des blocs initiaux dépendant de la clé interne. Ce procédé comporte les étapes suivantes, exécutées par un processeur de calcul d'un dispositif électronique programmable :
- une partition du message en au moins deux sous-messages, chaque sous-message comportant un ou plusieurs blocs initiaux successifs, entre un bloc de début de premier indice et un bloc de fin de deuxième indice le procédé comportant un chiffrement de chaque sous-message pour former un message chiffré global,
   le chiffrement d'un sous-message comportant, lors de l'étape d'initialisation :
   - une application d'une transformation cryptographique sur des éléments du triplet de paramètres cryptographiques permettant d'obtenir une clé interne intermédiaire,
   - une combinaison de la clé interne intermédiaire avec lesdits premier indice et deuxième indice, puis
- une nouvelle application de ladite transformation cryptographique sur le résultat de la combinaison pour obtenir ladite clé interne pour ledit sous-message, ladite clé interne
étant ensuite utilisée pour l'enchaînement de chiffrements par blocs des blocs initiaux dudit sous-message.

Avantageusement, l'invention permet de chiffrer par sous-messages accessibles individuellement pour un déchiffrement ultérieur, tout en évitant d'augmenter significativement la taille du message chiffré global. En effet, le procédé proposé ne nécessite pas l'utilisation d'un triplet de paramètres cryptographiques pour initialiser le chiffrement par sous-message, mais d'un seul triplet de paramètres cryptographiques pour la totalité du message, tout en assurant la robustesse du chiffrement par sous-message grâce à l'injection des premier et deuxièmes indices.

Suivant d'autres aspects avantageux de l'invention, le procédé de chiffrement comprend une ou plusieurs des caractéristiques suivantes, prises isolément ou suivant toutes les combinaisons techniquement possibles.

Le procédé de chiffrement comporte en outre, pour chaque sous-message, l'application dudit enchaînement de chiffrements par blocs des blocs initiaux dudit sous-message, et une insertion des blocs chiffrés obtenus séquentiellement dans le message chiffré global.

L'enchaînement de chiffrements des blocs initiaux comporte, pour un bloc initial courant, l'application de ladite transformation cryptographique pour fournir un bloc chiffré courant et une clé interne transformée, et prenant en entrée une combinaison du bloc initial courant et d'un bloc chiffré précédent, et une clé interne transformée issue de l'étape de chiffrement précédente.

La transformation cryptographique comprend la composition un nombre B prédéterminé de fois d'une même transformation élémentaire.

La transformation cryptographique est dite première transformation cryptographique, le procédé comportant en outre la génération d'un motif d'intégrité par sous-message, ledit motif d'intégrité étant calculé par application d'une deuxième transformation cryptographique au dernier bloc chiffré du sous-message, ladite deuxième transformation cryptographique comprenant la composition un nombre A prédéterminé de fois de la transformation élémentaire, le nombre A étant au moins égal au double du nombre B.

Le procédé comporte en outre une intégration du motif d'intégrité par sous-message dans le message chiffré global, en association avec ledit sous-message.

L'étape d'initialisation comprend une combinaison de le clé interne intermédiaire avec une concaténation des premier indice, deuxième indice et du motif d'intégrité généré pour un sous-message précédent.

Le procédé comporte une mémorisation temporaire, pour chaque sous-message, du motif d'intégrité associé et l'application d'un enchaînement de chiffrements des motifs d'intégrité successifs associés aux sous-messages successifs dudit message pour obtenir un motif d'intégrité global.

Le procédé comporte une insertion du motif d'intégrité global dans le message chiffré global.

Selon un autre aspect, l'invention concerne un dispositif de chiffrement de données numériques formant un message comportant une suite de blocs initiaux de taille prédéterminée, chaque bloc initial ayant un indice associé dans ladite suite de blocs, le dispositif de chiffrement comportant un module d'initialisation mettant en œuvre un triplet de paramètres cryptographiques pour fournir une clé interne, et un module de chiffrement par enchaînement de chiffrements des blocs initiaux dépendant de la clé interne. Ce dispositif de chiffrement comporte un processeur de calcul configuré pour exécuter:
- un module de partition du message en au moins deux sous-messages, chaque sous-message comportant un ou plusieurs blocs initiaux successifs, entre un bloc de début de premier indice et un bloc de fin de deuxième indice,
   le dispositif de chiffrement étant configuré pour effectuer un chiffrement de chaque sous-message pour former un message chiffré global, le chiffrement d'un sous-message comportant la mise en œuvre, par le module d'initialisation :
   d'un module d'application d'une transformation cryptographique sur des éléments du triplet de paramètres cryptographiques permettant d'obtenir une clé interne intermédiaire,
   d'un module de combinaison de la clé interne intermédiaire avec lesdits premier indice et deuxième indice, puis
   d'un module d'application de ladite transformation cryptographique sur le résultat de la combinaison pour obtenir ladite clé interne pour ledit sous-message, ladite clé interne étant ensuite utilisée pour l'enchaînement de chiffrements des blocs initiaux dudit sous-message.

Avantageusement, le dispositif de chiffrement est configuré pour exécuter le procédé de chiffrement de données numériques tel que brièvement décrit ci-dessus.

L'invention concerne également un programme d'ordinateur comportant des instructions logicielles qui, lorsqu'elles sont exécutées par un ordinateur, mettent en œuvre un procédé de chiffrement tel que défini ci-dessus.

Selon un autre aspect, l'invention concerne également un procédé de déchiffrement de données numériques d'un sous-message d'un message comportant une suite de blocs initiaux de taille prédéterminée, chaque bloc initial ayant un indice associé dans ladite suite de blocs, à partir d'un message chiffré global obtenu par application d'un procédé de chiffrement tel que décrit ci-dessus, le procédé de déchiffrement comportant les étapes suivantes, exécutées par un processeur de calcul d'un dispositif électronique programmable :
- obtention d'un premier indice de début de sous-message et d'un deuxième indice de fin dudit sous-message,
- initialisation d'une clé interne associée au sous-message comportant
   - une application de la transformation cryptographique sur des éléments du triplet de paramètres cryptographiques, permettant d'obtenir une clé interne intermédiaire,
   - une combinaison de la clé interne intermédiaire avec lesdits premier indice et deuxième indice, puis
   - une nouvelle application de ladite transformation cryptographique sur le résultat de la combinaison pour obtenir ladite clé interne pour ledit sous-message,
- extraction du bloc chiffré d'indice égal audit premier indice du message chiffré global et enchaînement de déchiffrements avec la clé interne calculée.

Selon un autre aspect, l'invention concerne un dispositif de déchiffrement de données numériques d'un sous-message d'un message comportant une suite de blocs initiaux de taille prédéterminée, chaque bloc initial ayant un indice associé dans ladite suite de blocs, à partir d'un message chiffré global obtenu par un dispositif de chiffrement tel que décrit ci-dessus, le dispositif de déchiffrement comportant un processeur de calcul configuré pour exécuter :
- un module d'obtention d'un premier indice de début de sous-message et d'un deuxième indice de fin dudit sous-message,
- un module d'initialisation d'une clé interne associée au sous-message mettant en œuvre :
   - un module d'application de ladite transformation cryptographique sur des éléments du triplet de paramètres cryptographiques, permettant d'obtenir une clé interne intermédiaire,
   - un module de combinaison de la clé interne intermédiaire avec lesdits premier indice et deuxième indice, puis
   - un module d'application de ladite transformation cryptographique sur le résultat de la combinaison pour obtenir ladite clé interne pour ledit sous-message,
- un module d'extraction du bloc chiffré d'indice égal audit premier indice du message chiffré global et enchaînement de déchiffrements avec la clé interne calculée.

L'invention concerne également un programme d'ordinateur comportant des instructions logicielles qui, lorsqu'elles sont exécutées par un ordinateur, mettent en œuvre un procédé de déchiffrement tel que défini ci-dessus.

L'invention apparaîtra plus clairement à la lecture de la description qui va suivre, donnée uniquement à titre d'exemple non limitatif, et faite en référence aux dessins dans lesquels :
[Fig. 1] la figure 1 est une représentation fonctionnelle d'un système de chiffrement/déchiffrement mettant en œuvre l'invention ;
[Fig. 2] la figure 2 est un logigramme des principales étapes d'un procédé de chiffrement selon un mode de réalisation ;
[Fig. 3] la figure 3 illustre des étapes du procédé de chiffrement selon un premier mode de réalisation ;
[Fig. 4] la figure 4 illustre des étapes du procédé de chiffrement selon un deuxième mode de réalisation ;
[Fig. 5] la figure 5 illustre des étapes du procédé de chiffrement selon un troisième mode de réalisation ;
[Fig. 6] la figure 6 est un logigramme des principales étapes d'un procédé de déchiffrement selon un mode de réalisation.

L'invention trouve des applications dans divers domaines de transmission et/ou de mémorisation de données numériques sous forme sécurisée.

Avantageusement, les procédés de chiffrement et déchiffrement proposés préservent les avantages du standard ASCON en termes de débit et de complexité calculatoire, et également en termes de sécurité cryptographique.

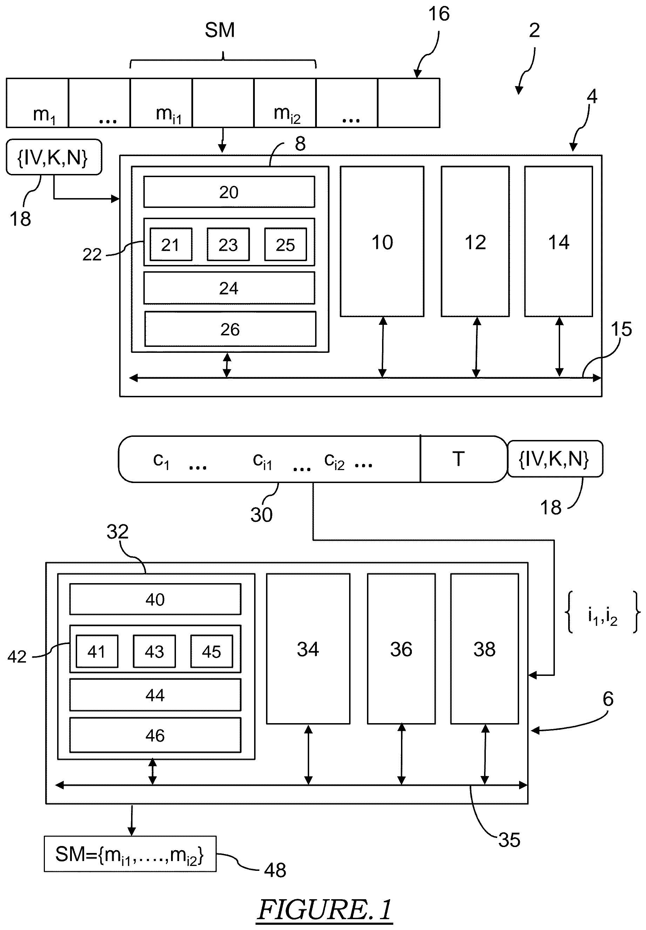

Selon un mode de réalisation, un système de chiffrement/déchiffrement 2 représenté en figure 1 comprend un dispositif de chiffrement 4 et un dispositif de déchiffrement 6, qui sont des dispositifs électroniques programmables, par exemple des ordinateurs.

Dans un mode de réalisation, le dispositif de chiffrement 4 et le dispositif de déchiffrement 6 sont adaptés pour communiquer via un réseau de communications, grâce à des interfaces de communication intégrées.

Selon une variante, le dispositif de chiffrement 4 et le dispositif de déchiffrement 6 sont implémentés par un même dispositif électronique programmable, les données chiffrées étant mémorisées localement et déchiffrées sur requête d'un utilisateur ou d'une application cliente.

Le dispositif de chiffrement 4 comporte un processeur de calcul 8, apte à exécuter des calculs et des instructions de code de programme d'ordinateur lorsque le dispositif 4 est mis sous tension, une mémoire électronique 10, adaptée à mémoriser des données sous forme de fichiers ou de registres par exemple, une interface de communication 12 et une interface homme-machine 14. Les éléments 8, 10, 12, 14 du dispositif de chiffrement sont adaptés à communiquer entre eux via des bus de communication 15.

Le dispositif de chiffrement 4 est configuré pour recevoir des données numériques à chiffrer sous forme d'un message Mess, référencé 16 en figure 1, codé sous forme d'une suite de blocs initiaux {m₁, .., mᵢ,...,m_{Q}}, chaque bloc initial de données ayant une taille r prédéterminée, chaque bloc initial ayant un indice i associé. Par exemple, chacun des blocs initiaux a une taille r égale à 64 bits (i.e. r=64 bits).

Les blocs initiaux sont non chiffrés, leur contenu est lisible. On dit également que les blocs initiaux sont « en clair ».

Le dispositif de chiffrement 4 est configuré pour obtenir également, en association avec un message 16, un triplet de paramètres cryptographiques 18, utile pour le chiffrement selon le standard ASCON.

Le triplet de paramètres cryptographiques 18 comporte un vecteur d'initialisation IV (en anglais « Initialization Vector »), une clé cryptographique K et un nombre de chiffrement N, également appelé « nonce ».

Par exemple la clé cryptographique est codée sur 128 bits ou 160 bits. Pour une clé cryptographique de 128 bits, le niveau de sécurité classique est de 128 bits et le niveau de sécurité post-quantique de 64 bits. Pour une clé de 160 bits, le niveau de sécurité classique est de 160 bits et le niveau de sécurité post-quantique de 80 bits.

Le nombre de chiffrement N est par exemple un nombre de 128 bits.

Le processeur 8 du dispositif de chiffrement 4 est configuré pour exécuter un module de partition 20 du message Mess en sous-messages SM, chaque sous-message étant défini par un premier indice i₁, qui est l'indice du premier bloc initial du sous-message, et un deuxième indice i₂, qui est l'indice du dernier bloc du sous-message. En d'autres termes, le premier indice i₁ est un indice de début du sous-message et le deuxième indice i₂ est un indice de fin du sous-message.

Chaque sous-message comporte un ou plusieurs blocs initiaux, le nombre de blocs initiaux d'un sous-message pouvant être variable d'un sous-message à un autre.

Le processeur 8 du dispositif de chiffrement 4 est en outre configuré pour exécuter des modules 22 et 24 pour réaliser un chiffrement par sous-message.

Le module 22 d'initialisation comporte :
- un module 21 d'application d'une transformation cryptographique sur des éléments du triplet de paramètres cryptographiques 18 permettant d'obtenir une clé interne intermédiaire ;
- un module 23 de combinaison de la clé interne intermédiaire avec le premier indice et le deuxième indice ;
- un module 25 d'application de la transformation cryptographique sur le résultat de la combinaison, pour obtenir une clé interne associée au sous-message.

Le module 24 de chiffrement des blocs initiaux du sous-message met en œuvre un enchaînement de chiffrements suivant la suite de blocs formant le sous-message, en utilisant la clé interne associée au sous-message.

La clé interne s'apparente, pour le chiffrement selon le standard ASCON, à un état interne de fonctions appliquées pour le chiffrement/déchiffrement. La clé interne, c'est-à-dire l'état interne, évolue à chaque étape de chiffrement par blocs.

Optionnellement, le processeur 8 est configuré pour mettre en œuvre un module 26 de génération d'un ou plusieurs motifs d'intégrité, permettant alors en plus une authentification des données chiffrées.

Les modules 20, 22, 24 et 26 coopèrent pour la mise en œuvre d'un procédé de chiffrement tel que décrit ci-après.

Dans un mode de réalisation, les modules 20, 22, 24 et 26 sont réalisés sous forme de logiciel, et forment un programme d'ordinateur comportant des instructions de code de programme exécutables par un dispositif électronique programmable, pour mettre en œuvre le procédé de chiffrement décrit ci-après. Le programme d'ordinateur est en outre apte à être enregistré sur un support, non représenté, lisible par ordinateur. Le support lisible par ordinateur est par exemple un medium apte à mémoriser des instructions électroniques et à être couplé à un bus d'un système informatique. A titre d'exemple, le support lisible est un disque optique, un disque magnéto-optique, une mémoire ROM, une mémoire RAM, tout type de mémoire non-volatile (par exemple FLASH ou NVRAM) ou une carte magnétique.

En variante, les modules 20, 22, 24 et 26 sont réalisés chacun sous forme d'un composant logique programmable, tel qu'un FPGA (de l'anglais *Field Programmable Gate Array*)*,* un GPU (processeur graphique) ou un GPGPU (de l'anglais *General-purpose processing on graphics processing),* ou encore sous forme d'un circuit intégré dédié, tel qu'un ASIC (de l'anglais *Application Specific Integrated Circuit).*

Le dispositif de chiffrement fournit en sortie un message chiffré global 30, comportant des blocs chiffrés {c₁,...,c_{Q}}, optionnellement un ou plusieurs motifs d'intégrité. Le triplet de paramètres cryptographiques 16 est également associé au message chiffré global 30.

Plus généralement, le triplet de paramètres cryptographiques est connu à la fois par le dispositif de chiffrement 4 et par le dispositif de déchiffrement 6.

Le message chiffré global 30 est mémorisé et/ou transmis via un réseau de communications à un dispositif de déchiffrement 6.

Avantageusement, grâce au procédé de chiffrement mis en œuvre par le dispositif de chiffrement 4, le déchiffrement d'un sous-message comportant les blocs d'indices i₁ à i₂ est réalisable sans la nécessité de déchiffrer tous les blocs chiffrés précédant le bloc de premier indice i1.

Le dispositif de déchiffrement 6 est un dispositif électronique programmable, comportant un processeur de calcul 32, apte à exécuter des calculs et des instructions de code de programme d'ordinateur lorsque le dispositif électronique programmable 6 est mis sous tension, une mémoire électronique 34, adaptée à mémoriser des données sous forme de fichiers ou de registres par exemple, une interface de communication 36 et une interface homme-machine 38. Les éléments 32, 34, 36, 38 du dispositif de déchiffrement sont adaptés à communiquer entre eux via des bus de communication 35.

Le processeur de calcul 32 est configuré pour exécuter un module 40 d'obtention du premier indice i₁ et du deuxième indice i₂ qui sont respectivement l'indice de début et de fin d'un sous-message à déchiffrer.

Le processeur de calcul 32 est en outre configuré pour exécuter un module 42 d'initialisation d'une clé interne associée au sous-message, le module 42 étant analogue au module 22 d'initialisation mis en œuvre par le dispositif de chiffrement 4.

Le module d'initialisation 42 comporte :
- un sous 41 d'application d'une transformation cryptographique sur des éléments du triplet de paramètres cryptographiques 18 permettant d'obtenir une clé interne intermédiaire ;
- un sous 43 de combinaison de la clé interne intermédiaire avec le premier indice et le deuxième indice ;
- un sous 45 d'application de la transformation cryptographique sur le résultat de la combinaison, pour obtenir une clé interne associée au sous-message.

Le processeur de calcul 32 est en outre configuré pour exécuter un module 44 d'extraction du bloc chiffré d'indice i₁ et d'enchainement de déchiffrements en utilisant la clé interne calculée, jusqu'au dernier bloc chiffré du sous-message d'indice i₂.

Optionnellement, le processeur de calcul 32 est également configuré pour exécuter un module 46 d'authentification du sous-message en fonction du ou des motifs d'authentification reçus.

En sortie le dispositif de déchiffrement fournit au moins sous-message déchiffré SM={mᵢ₁,...mᵢ₂} référencé 48 dans la figure 1.

Les modules 40, 42, 44 et 46 coopèrent pour la mise en œuvre d'un procédé de déchiffrement tel que décrit ci-après.

Dans un mode de réalisation, les modules 40, 42, 44 et 46 sont réalisés sous forme de logiciel, et forment un programme d'ordinateur comportant des instructions de code de programme exécutables par un dispositif électronique programmable, pour mettre en œuvre le procédé de déchiffrement décrit ci-après. Le programme d'ordinateur est en outre apte à être enregistré sur un support, non représenté, lisible par ordinateur. Le support lisible par ordinateur est par exemple un medium apte à mémoriser des instructions électroniques et à être couplé à un bus d'un système informatique. A titre d'exemple, le support lisible est un disque optique, un disque magnéto-optique, une mémoire ROM, une mémoire RAM, tout type de mémoire non-volatile (par exemple FLASH ou NVRAM) ou une carte magnétique.

En variante, les modules 40, 42, 44 et 46 sont réalisés chacun sous forme d'un composant logique programmable, tel qu'un FPGA (de l'anglais *Field Programmable Gate Array*), un GPU (processeur graphique) ou un GPGPU (de l'anglais *General-purpose processing on graphics processing),* ou encore sous forme d'un circuit intégré dédié, tel qu'un ASIC (de l'anglais *Application Specific Integrated Circuit).*

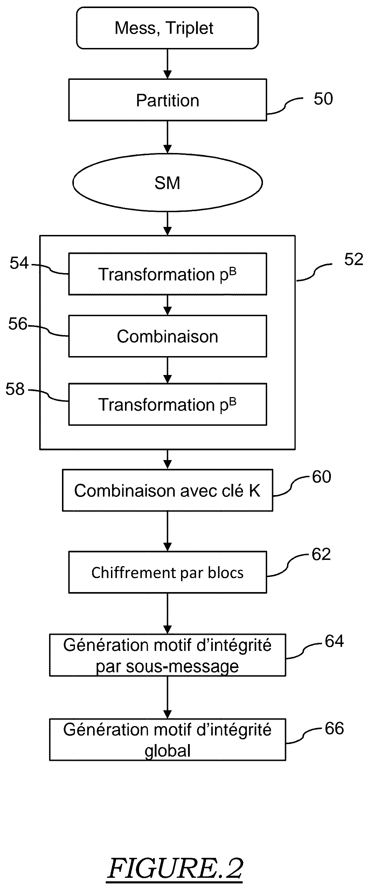

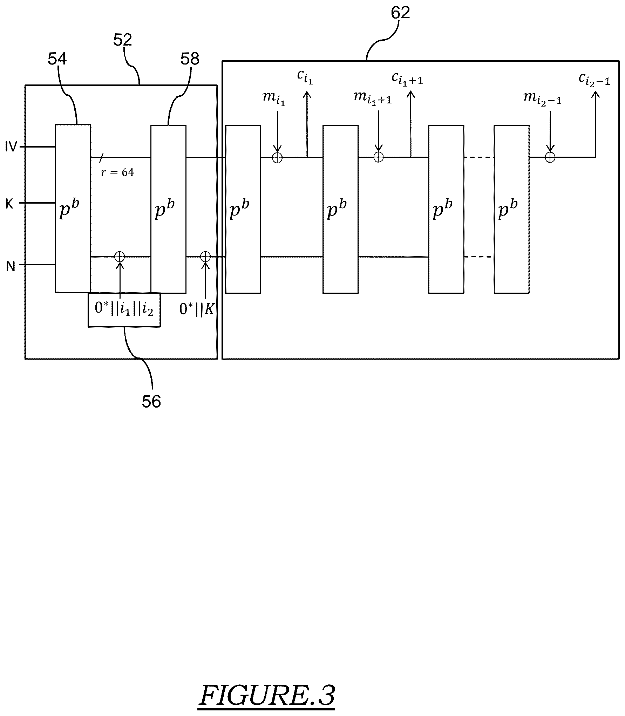

Les figures 2 et 3 représentent les principales étapes d'un procédé de chiffrement selon un mode de réalisation.

En entrée du procédé sont fournis : un message Mess={m₁,....,mᵢ₁,...,mᵢ₂,....m_{Q}} et un triplet de paramètres cryptographiques ,comportant un vecteur d'initialisation IV, une clé cryptographique K et un nombre cryptographique N.

Le procédé comporte une étape 50 de partition du message en sous-messages de tailles variables ou égales.

Pour chaque sous-message SM={mᵢ₁,...,mᵢ₂}, le procédé comporte une étape d'initialisation 52, comportant les sous-étapes suivantes :
- application 54 d'une transformation cryptographique sur des éléments du triplet de paramètres cryptographiques permettant d'obtenir une clé interne intermédiaire ;
- combinaison 56 de la clé interne intermédiaire avec le premier indice i₁ et le deuxième indice i₂, optionnellement en ajoutant des zéros si nécessaire pour obtenir un vecteur de taille prédéterminée ;
- nouvelle application 58 de ladite transformation cryptographique sur le résultat de la combinaison pour obtenir une clé interne pour ledit sous-message, la clé interne étant ensuite utilisée pour l'enchaînement d'étapes de chiffrement des blocs initiaux du sous-message SM.

Par exemple, à l'étape 54, la transformation cryptographique est appliquée sur une concaténation des paramètres IV, K et N du triplet de paramètres cryptographique

La transformation cryptographique est une transformation notée p^{B}, consistant en la composition d'un nombre B de fois d'une transformation élémentaire p. La transformation élémentaire p est par exemple une permutation, comme cela est défini par le standard ASCON, référence NIST SP 800-232.]

La combinaison 56 met en œuvre une concaténation des premier et deuxième indices, avec optionnellement un nombre de « 0 » pour former un vecteur de taille donnée, et l'application d'un opérateur « OU exclusif » (XOR), noté ⊕ sur les figures 3 à 5. L'opération de concaténation est représentée par le symbole « II » sur les figures 3 à 5.

L'étape d'initialisation 52 fournit la clé interne associée au message, qui est combinée à l'étape 60 alors avec la clé cryptographique K.

Le procédé comprend alors l'application 62 d'un enchaînement de chiffrements par blocs des blocs initiaux mᵢ₁ à mᵢ₂ du sous-message SM, permettant d'obtenir des blocs chiffrés cᵢ₁ à cᵢ₂ correspondants, les blocs chiffrés étant insérés séquentiellement dans un message chiffré global.

Les chiffrements se font par application de la transformation cryptographique p^{B}, comme cela est illustré dans la figure 3.

Pour un bloc initial courant noté mₖ (bloc « en clair ») la transformation cryptographique est appliquée pour fournir un bloc chiffré courant cₖ et une clé interne transformée (i.e. un état interne transformé), en prenant en entrée une combinaison du bloc initial courant mₖ et d'un bloc chiffré précédent cₖ₋₁ (correspondant au chiffrement du bloc initial mₖ₋₁) et une clé interne transformée issue de l'étape de chiffrement précédente.

Dans un mode de réalisation, le procédé comporte en outre une étape 64 de génération d'un motif d'intégrité du sous-message SM.

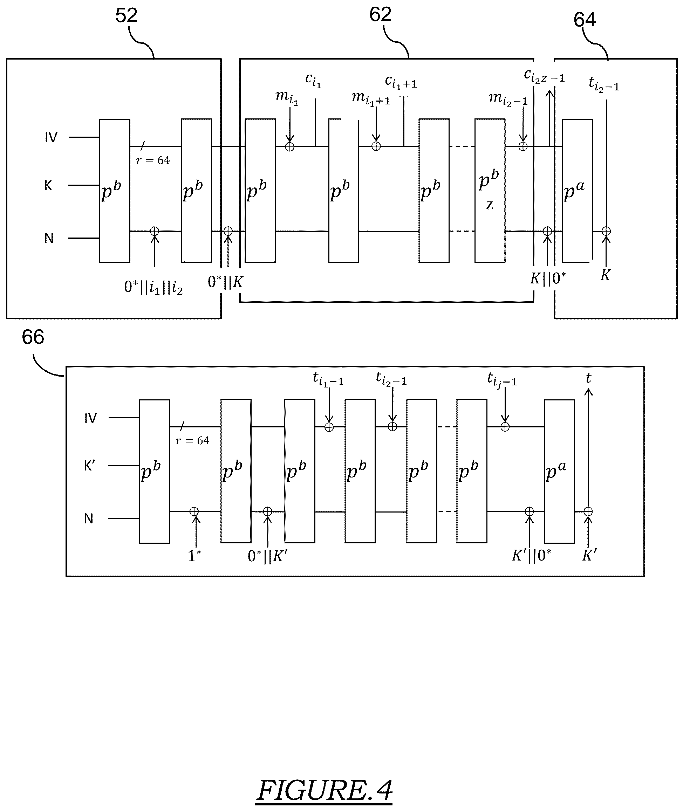

Par exemple, comme préconisé dans le standard ASCON, le motif d'intégrité par sous-message est calculé par application d'une deuxième transformation cryptographique p^{A}, par composition un nombre A de fois de la transformation élémentaire p. Le nombre A respecte la condition : *A* ≥ 2*B.* La deuxième transformation cryptographique est appliquée au dernier bloc chiffré du sous-message, comme illustré à la figure 4.

Optionnellement, dans un deuxième mode de réalisation, l'étape 64 est suivie d'une génération 66 d'un motif d'intégrité global correspondant au message chiffré global, comme illustré dans la figure 4. Dans ce mode de réalisation, de préférence, le motif d'intégrité global est intégré au message chiffré global et transmis pour authentification ultérieure. Les motifs d'intégrité par sous-message ne sont pas conservés.

Comme illustré dans la figure 4, dans ce deuxième mode de réalisation, les motifs d'intégrité par sous-message sont temporairement mémorisés. L'étape 66 de génération d'un motif d'intégrité global met en œuvre un chiffrement selon le standard ASCON AEAD des motifs d'intégrité par sous-message, avec enchaînement de chiffrements des motifs d'intégrité successifs associés aux sous-message, initialisé avec un triplet de paramètres cryptographiques {IV,K',N}, la clé cryptographique K' étant distincte de la clé cryptographique K utilisée pour le chiffrement des blocs du message.

Selon une variante, la clé cryptographique K' est identique à la clé cryptographique K.

Le motif d'intégrité global est inséré dans le message chiffré global 30, les motifs d'intégrité par sous-message n'étant pas conservés dans le message chiffré global 30.

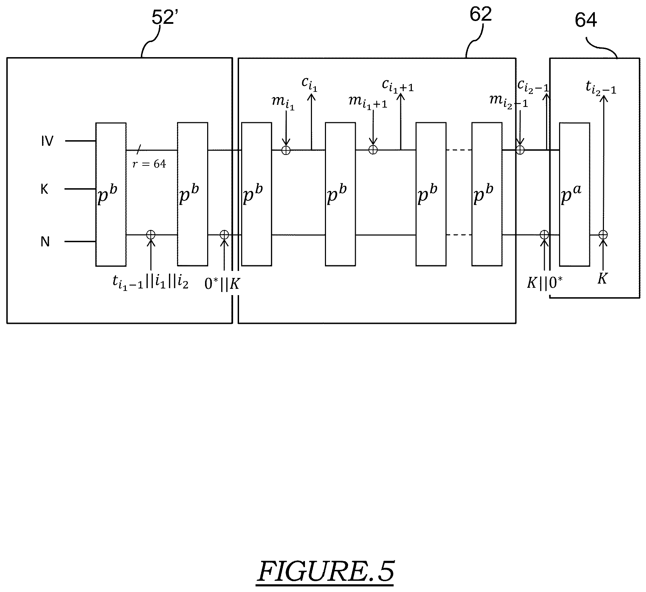

Selon un troisième mode de réalisation, illustré à la figure 5, l'initialisation 52 est modifiée en une étape d'initialisation 52', dans laquelle le motif d'intégrité du sous-message précédent noté Tᵢ₁₋₁ étant utilisé pour le calcul de la clé interne. Par exemple, le motif d'intégrité du sous-message précédent noté Tᵢ₁₋₁ est concaténé avec le premier indice i₁ et avec le deuxième indice i₂, le résultat de la concaténation étant combiné avec le résultat de l'étape 54.

Un motif d'intégrité est généré et mémorisé pour chaque sous-message, et intégré au message chiffré global.

Dans ce troisième mode de réalisation, un motif d'intégration par sous-message est transmis au dispositif de déchiffrement. Avantageusement, par rapport au mode de réalisation décrit en référence à la figure 4, il n'est pas nécessaire d'effectuer un déchiffrement complet à partir d'un motif d'intégrité global pour authentifier un sous-message. Dans ce mode de réalisation, il est possible d'authentifier chaque sous-message indépendamment des autres sous-messages, mais la taille du message chiffré global est augmentée.

Avantageusement, le vecteur d'initialisation indique le mode de chiffrement à utiliser.

Avantageusement, dans tous les modes de réalisation décrits, l'étape d'initialisation permet d'obtenir une clé interne spécifique au sous-message, et par conséquent de modifier ou perturber l'état interne des transformations de chiffrement de manière unique et spécifique au sous-message à chiffrer, tout en préservant le même niveau de sécurité cryptographique que le standard ASCON.

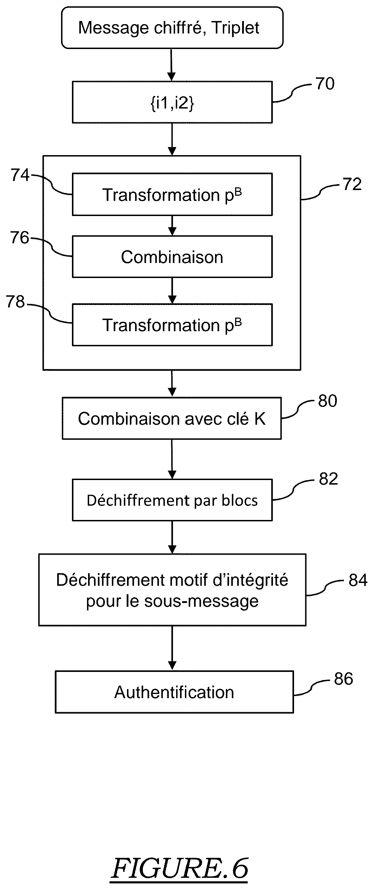

La figure 6 est un synoptique des principales étapes d'un procédé de déchiffrement d'un sous-message à partir d'un message chiffré global obtenu par un procédé de chiffrement tel que décrit ci-dessus. Le procédé de déchiffrement est mis en œuvre par un dispositif électronique programmable de déchiffrement tel que décrit ci-dessus.

En entrée sont fournis le message chiffré global, le triplet de paramètres cryptographiques et les premier indice i₁ et deuxième indice i₂ associés au sous-message à déchiffrer.

Par exemple, les indices i₁, i₂ sont fournis à une étape de fourniture 70, soit par un utilisateur via une interface homme-machine ou par une application cliente.

Le procédé de déchiffrement comprend ensuite une étape d'initialisation 72, analogue à l'étape d'initialisation effectuée lors du chiffrement par le dispositif de chiffrement, pour obtenir la clé interne associée au sous-message comportant les blocs d'indices i₁ à i₂.

L'étape d'initialisation 72, comporte les sous-étapes suivantes :
- application 74 transformation cryptographique sur des éléments du triplet de paramètres cryptographiques permettant d'obtenir une clé interne intermédiaire ;
- combinaison 76 de la clé interne intermédiaire avec le premier indice i₁ et le deuxième indice i₂, optionnellement en ajoutant des zéros si nécessaire pour obtenir un vecteur de taille prédéterminée ;
- nouvelle application 78 de ladite transformation cryptographique sur le résultat de la combinaison pour obtenir ladite clé interne (ou en d'autres termes l'état interne) pour ledit sous-message.

La transformation cryptographique est la même que celle utilisée lors du chiffrement.

La clé interne étant ensuite utilisée pour l'enchaînement d'étapes de déchiffrement des blocs initiaux dudit sous-message.

Le procédé de déchiffrement comporte également une combinaison 80 avec la clé K, par exemple en appliquant un opération «OU exclusif », puis une étape 82 d'extraction du message chiffré global du bloc chiffré de premier indice i₁ et un enchaînement de déchiffrements des blocs chiffrés jusqu'au bloc d'indice i₂ à la manière explicitée dans le standard ASCON.

Le procédé de déchiffrement comprend optionnellement une étape 84 de déchiffrement du motif d'intégrité du sous-message et une étape 86 d'authentification.

La mise en œuvre de l'étape 84 dépend du mode de réalisation du chiffrement, comme décrit ci-dessus.

Dans le deuxième mode de réalisation où un seul motif d'intégrité global est transmis, ce motif d'intégrité global est déchiffré séquentiellement pour obtenir le motif d'intégrité du sous-message considéré.

Dans le troisième mode de réalisation où les motifs d'intégrité par sous-message sont inclus dans le message chiffré global, le motif d'intégrité associé au sous-message traité est extrait. Il est à noter que dans ce mode de réalisation, en miroir à l'étape d'initialisation 52', l'étape d'initialisation 72 est modifiée pour prendre en considération le motif d'intégrité du sous-message précédent, Tᵢ₁₋₁.

L'étape d'authentification 86 est réalisée de manière classique, en fonction du motif d'intégrité, dit premier motif d'intégrité, associé au sous-message et du sous-message déchiffré : un deuxième motif d'intégrité est calculé à partir du sous-message déchiffré et comparé au premier motif d'intégrité obtenu à l'étape 84.

Avantageusement, l'invention permet de rajouter une fonctionnalité de déchiffrement partiel au standard ASCON, tout en préservant les avantages d'ASCON en termes d'utilisation des ressources calculatoires et en termes de sécurité cryptographique.

## Revendications

1. Procédé de chiffrement de données numériques formant un message (16) comportant une suite de blocs initiaux de taille prédéterminée, chaque bloc initial ayant un indice associé dans ladite suite de blocs, le chiffrement comportant une étape d'initialisation mettant en œuvre un triplet de paramètres cryptographiques (18) pour fournir une clé interne, et un enchaînement de chiffrements par blocs des blocs initiaux dépendant de la clé interne, le procédé étant **caractérisé en ce qu'**il comporte les étapes suivantes, exécutées par un processeur de calcul d'un dispositif électronique programmable :
- une partition (50) du message (16) en au moins deux sous-messages, chaque sous-message comportant un ou plusieurs blocs initiaux successifs, entre un bloc de début de premier indice (i1) et un bloc de fin de deuxième indice (i2),
le procédé comportant un chiffrement de chaque sous-message pour former un message chiffré global,
le chiffrement d'un sous-message (SM) comportant, lors de l'étape d'initialisation (52) :
- une application (54) d'une transformation cryptographique sur des éléments du triplet de paramètres cryptographiques permettant d'obtenir une clé interne intermédiaire,
- une combinaison (56) de la clé interne intermédiaire avec lesdits premier indice et deuxième indice, puis
- une nouvelle application (58) de ladite transformation cryptographique sur le résultat de la combinaison pour obtenir ladite clé interne pour ledit sous-message, ladite clé interne étant ensuite utilisée pour l'enchaînement de chiffrements par blocs (62) des blocs initiaux dudit sous-message.

2. Procédé de chiffrement selon la revendication 1, comportant en outre, pour chaque sous-message, l'application (62) dudit enchaînement de chiffrements par blocs des blocs initiaux dudit sous-message, et une insertion des blocs chiffrés obtenus séquentiellement dans le message chiffré global (30).

3. Procédé selon la revendication 1 ou 2, dans lequel ledit enchaînement de chiffrements des blocs initiaux comporte, pour un bloc initial courant, l'application de ladite transformation cryptographique pour fournir un bloc chiffré courant et une clé interne transformée, et prenant en entrée une combinaison du bloc initial courant et d'un bloc chiffré précédent, et une clé interne transformée issue de l'étape de chiffrement précédente.

4. Procédé selon l'une des revendications 1 à 3, dans lequel ladite transformation cryptographique comprend la composition un nombre B prédéterminé de fois d'une même transformation élémentaire.

5. Procédé de chiffrement selon la revendication 4, dans lequel ladite transformation cryptographique est dite première transformation cryptographique, le procédé comportant en outre la génération (64) d'un motif d'intégrité par sous-message, ledit motif d'intégrité étant calculé par application d'une deuxième transformation cryptographique au dernier bloc chiffré du sous-message, ladite deuxième transformation cryptographique comprenant la composition un nombre A prédéterminé de fois de la transformation élémentaire, le nombre A étant au moins égal au double du nombre B.

6. Procédé de chiffrement selon la revendication 5, comportant en outre une intégration du motif d'intégrité par sous-message dans le message chiffré global, en association avec ledit sous-message.

7. Procédé de chiffrement selon la revendication 6, dans lequel dans l'étape d'initialisation (52') comprend une combinaison de le clé interne intermédiaire avec une concaténation des premier indice, deuxième indice et du motif d'intégrité généré pour un sous-message précédent.

8. Procédé de chiffrement selon la revendication 5, comportant une mémorisation temporaire, pour chaque sous-message, du motif d'intégrité associé et l'application d'un enchaînement de chiffrements des motifs d'intégrité successifs associés aux sous-messages successifs dudit message pour obtenir un motif d'intégrité global.

9. Procédé de chiffrement selon la revendication 8, comportant une insertion du motif d'intégrité global dans le message chiffré global.

10. Procédé de déchiffrement de données numériques d'un sous-message (SM) d'un message comportant une suite de blocs initiaux de taille prédéterminée, chaque bloc initial ayant un indice associé dans ladite suite de blocs, à partir d'un message chiffré global (30) obtenu par application d'un procédé de chiffrement conforme à l'une des revendications 1 à 8, le procédé de déchiffrement étant **caractérisé en ce qu'**il comporte les étapes suivantes, exécutées par un processeur de calcul d'un dispositif électronique programmable :
- obtention (70) d'un premier indice de début de sous-message et d'un deuxième indice de fin dudit sous-message,
- initialisation (72) d'une clé interne associée au sous-message comportant
- une application (74) de la transformation cryptographique sur des éléments du triplet de paramètres cryptographiques, permettant d'obtenir une clé interne intermédiaire,
- une combinaison (76) de la clé interne intermédiaire avec lesdits premier indice et deuxième indice, puis
- une nouvelle application (78) de ladite transformation cryptographique sur le résultat de la combinaison pour obtenir ladite clé interne pour ledit sous-message,
- extraction (82) du bloc chiffré d'indice égal audit premier indice du message chiffré global et enchaînement de déchiffrements avec la clé interne calculée.

11. Procédé de déchiffrement selon la revendication 10, le message chiffré global (30) comportant au moins un motifs d'intégrité, le procédé comportant une étape (84) de déchiffrement d'un motif d'intégrité du sous-message et une étape (86) d'authentification du sous-message en fonction dudit motif d'intégrité du sous-message.

12. Programme d'ordinateur comportant des instructions logicielles qui, lorsqu'elles sont mises en œuvre par un dispositif électronique programmable, mettent en œuvre un procédé de chiffrement de données numériques conforme aux revendications 1 à 9.

13. Programme d'ordinateur comportant des instructions logicielles qui, lorsqu'elles sont mises en œuvre par un dispositif électronique programmable, mettent en œuvre un procédé de déchiffrement de données numériques conforme aux revendications 10 et 11.

14. Dispositif de chiffrement de données numériques formant un message comportant une suite de blocs initiaux de taille prédéterminée, chaque bloc initial ayant un indice associé dans ladite suite de blocs, le dispositif de chiffrement comportant un module (22) d'initialisation mettant en œuvre un triplet de paramètres cryptographiques (18) pour fournir une clé interne, et un module de chiffrement (24) par enchaînement de chiffrements des blocs initiaux dépendant de la clé interne, le dispositif de chiffrement (4) étant **caractérisé en ce qu'**il comporte un processeur de calcul configuré pour exécuter:
- un module de partition (20) du message (16) en au moins deux sous-messages (SM), chaque sous-message comportant un ou plusieurs blocs initiaux successifs, entre un bloc de début de premier indice (i1) et un bloc de fin de deuxième indice (i2),
le dispositif de chiffrement (4) étant configuré pour effectuer un chiffrement de chaque sous-message pour former un message chiffré global (30), le chiffrement d'un sous-message comportant la mise en œuvre, par le module (22) d'initialisation :
d'un module (21) d'application d'une transformation cryptographique sur des éléments du triplet de paramètres cryptographiques permettant d'obtenir une clé interne intermédiaire,
d'un module (23) de combinaison de la clé interne intermédiaire avec lesdits premier indice et deuxième indice, puis
- d'un module (25) d'application de ladite transformation cryptographique sur le résultat de la combinaison pour obtenir ladite clé interne pour ledit sous-message, ladite clé interne étant ensuite utilisée pour l'enchaînement de chiffrements des blocs initiaux dudit sous-message.

15. Dispositif de déchiffrement de données numériques d'un sous-message d'un message comportant une suite de blocs initiaux de taille prédéterminée, chaque bloc initial ayant un indice associé dans ladite suite de blocs, à partir d'un message chiffré global (30) obtenu par un dispositif de chiffrement selon la revendication 14, le dispositif de déchiffrement (6) étant **caractérisé en ce qu'**il comporte un processeur de calcul configuré pour exécuter :
- un module (40) d'obtention d'un premier indice (i1) de début de sous-message et d'un deuxième indice (i2) de fin dudit sous-message,
- un module d'initialisation (42) d'une clé interne associée au sous-message mettant en œuvre :
- un module (41) d'application de ladite transformation cryptographique sur des éléments du triplet de paramètres cryptographiques (18), permettant d'obtenir une clé interne intermédiaire,
- un module (43) de combinaison de la clé interne intermédiaire avec lesdits premier indice et deuxième indice, puis
- un module (45) d'application de ladite transformation cryptographique sur le résultat de la combinaison pour obtenir ladite clé interne pour ledit sous-message,
- un module (44) d'extraction du bloc chiffré d'indice égal audit premier indice du message chiffré global et enchaînement de déchiffrements avec la clé interne calculée.
